# EUROPEAN PATENT APPLICATION

(11) **EP 4 722 618 A1**
(43) Date of publication of application: **08.04.2026**
(21) Application number: 25206505.7
(22) Date of filing: 02.10.2025
(51) Int. Cl.: F26B 3/28, F26B 25/22

(54) **SYSTEM AND METHOD FOR CONTROLLING ELECTRODE PLATE DRYING**

(30) Priority: 07.10.2024 KR 20240136101
(71) Applicant: SAMSUNG SDI CO., LTD., Yongin-si, Gyeonggi-do 17084 (KR)
(72) Inventor: HONG, JinUk, 17084 Yongin-si (KR); KIM, Jongdae, 17084 Yongin-si (KR)
(74) Representative: Marks & Clerk LLP

(57) **Abstract**

A system and method for controlling electrode plate drying, and more particularly a system and method for performing laser-based electrode plate drying control, are described. The method of controlling electrode plate drying may include the steps of (a) receiving electrode plate drying degree information, and (b) determining a beam energy intensity profile according to an electrode plate drying degree monitoring result.

## Description

### BACKGROUND

### 1. Technical Field

The present disclosure relates to a system and method for controlling electrode plate drying, and more particularly to a system and method for controlling laser-based electrode plate drying.

### 2. Related Art

According to a related art, a drying process after coating electrode plates for secondary batteries is performed using a hot-air drying method. Hot-air drying, as a method of transferring thermal energy to a wet electrode plate through convection, requires high power consumption due to low thermal transfer efficiency thereof, thereby exacerbating environmental issues such as carbon emissions. Due to the low thermal transfer efficiency of the hot-air drying method, it is necessary to install and operate a relatively long hot-air drying path (ranging from 60 meters to 100 meters) based on a mass production line to achieve sufficient drying. For double-sided coating, it is problematic in that additional hot-air drying paths of the same length are required to be installed and operated on both the upper and lower sides of the drying path.

In other words, it is necessary to install drying furnaces with a length ranging from 60 meters to 100 meters in two stages on upper and lower sides, which inevitably increase the volume occupied by the electrode plate drying furnaces in the mass production line, thereby raising issues related to factory construction costs. Recently, as electrode plates are made thicker to increase the capacity of secondary batteries, the time required to dry electrode plates increases, leading to a reduction in the productivity of the drying process.

### SUMMARY

Embodiments of the present disclosure are directed to providing a system and method for controlling electrode plate drying, in which laser-based electrode plate drying control is employed, thereby reducing input power consumption and carbon emissions compared to hot-air drying furnaces, and improving electrode plate drying efficiency and the productivity of electrode plate drying processes by increasing thermal energy transfer rates.

A system for controlling electrode plate drying according to embodiments of the present disclosure may include an input interface device configured to receive electrode plate drying information, a memory storing a program provided to perform electrode plate drying using a laser beam based on the electrode plate drying degree information, a processor configured to execute the program. The processor may determine a laser beam energy intensity based on the electrode plate drying degree information.

The input interface device may receive at least one of the electrode plate drying degree information for lines on the electrode plate and the electrode plate drying degree information for positions in each of the lines.

The processor may perform output control of a laser beam area according to the laser beam energy intensity profile.

The processor may adjust the laser beam energy intensity profile based on a change in the number of coating lines.

The processor may adjust the laser beam energy intensity profile based on a change in a coating size.

The processor, to reduce beam irradiation to a non-coated portion area, may perform the output control with relatively high current based on a preset central area, and perform the output control with current that gradually decreases to relatively low levels toward opposite sides based on the preset central area.

A method of controlling electrode plate drying according to embodiments of the present disclosure may be performed by a system for controlling electrode plate drying, and include the steps of: (a) receiving electrode plate drying degree information; and (b) determining laser beam energy intensity profile based on an electrode plate drying degree monitoring result.

The system used to perform the method may comprise or take the form of the system for controlling electrode plate drying as described above at paragraph [0005] et seq.

The step (a) may include receiving drying degree information for lines on the electrode plate.

The step (a) may include receiving drying degree information for positions in each line on the electrode plate.

The step (b) may include defining a beam profile type for laser beam irradiation areas segmented according to a preset scheme, and determining a beam energy intensity profile by controlling a percentage of current.

The step (b) may include, to reduce beam irradiation to a non-coated portion area, performing output control with relatively high current based on a preset central area, and performing output control with current that gradually decreases to relatively low levels toward opposite sides based on the preset central area.

The step (b) may include irradiating a laser beam using local dimming and a lens array.

According to the present disclosure, as the degree of freedom in a beam energy intensity profile provided for each area is enhanced by segmented output control for a laser beam area, the amount of thermal energy applied to a non-coated portion during multi-line coating drying may be minimized, and occurrence of wrinkles in the non-coated portion and curls in an electrode plate may be mitigated, thereby providing an effect of improving electrode plate drying quality.

According to the present disclosure, by providing a thermal energy intensity profile customized based on drying statuses for coating lines or positions in each line, drying deviation of the multi-line coated electrode plate may be mitigated, and uniform drying quality may be implemented.

At least some of the above and other features of the invention are set out in the claims.

### BRIEF DESCRIPTION OF THE DRAWINGS

The following drawings illustrate example embodiments of the present disclosure, and further describe example aspects of the present disclosure together with the detailed description of the present disclosure. Thus, the present disclosure should not be construed as being limited to the drawings:
FIG. 1 schematically illustrates an electrode assembly of a secondary battery;
FIG. 2 schematically illustrates a configuration of a pouch-type secondary battery;
FIG. 3 illustrates a schematic external appearance configuration of a prismatic secondary battery;
FIG. 4 is a cross-sectional view of a cylindrical secondary battery;
FIG. 5 illustrates a laser beam profile according to a related art.
FIG. 6 illustrates a front view of a system for controlling electrode plate drying according to embodiments of the present disclosure.
FIG. 7 illustrates a plan view of the system for controlling electrode plate drying according to embodiments of the present disclosure.
FIG. 8 illustrates types of laser beam profiles according to embodiments of the present disclosure.
FIG. 9 illustrates beam profiles before using local dimming, when using local dimming, and when using local dimming and optics, according to embodiments of the present disclosure.
FIG. 10 illustrates measurement data of the degree of electrode plate drying.
FIG. 11 illustrates beam energy intensity customization control based on the degree of electrode plate drying according to embodiments of the present disclosure.
FIG. 12 illustrates power supply output control according to embodiments of the present disclosure.
FIG. 13 illustrates a method of controlling electrode plate drying according to embodiments of the present disclosure.
FIG. 14 is a block diagram illustrating a computer system for implementing the method according to embodiments of the present disclosure.
FIG. 15 is an example view of a secondary battery module in which secondary batteries manufactured according to examples of the present disclosure are arranged;
FIG. 16 is an example view of a secondary battery pack including the secondary battery module illustrated in FIG. 15; and
FIG. 17 is a conceptual view of a vehicle including the secondary battery pack illustrated in FIG. 16.

### DETAILED DESCRIPTION

Hereinafter, example embodiments of the present disclosure will be described, in detail, with reference to the accompanying drawings. The terms or words used in the present specification and claims are not to be limitedly interpreted based on their general or ordinary meaning, and should be interpreted as meanings and concepts that are consistent with the technical idea of the present disclosure on the basis of the principle that an inventor can be their own lexicographer to appropriately define concepts of terms to describe their invention in the best way.

The example embodiments described in this specification and the configurations shown in the drawings are only some example embodiments of the present disclosure and do not represent all of the aspects of the present disclosure. Accordingly, it should be understood that there may be various equivalents and modifications that can replace or modify one or more example embodiments described herein at the time of filing this application.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges is within the scope of this invention.

References to two compared elements, features, etc. As being "the same" may mean that they are "substantially the same." Thus, the phrase "substantially the same" may include a case having a deviation that is considered low in the art, for example, a deviation of 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

The terminology used herein is for the purpose of describing example embodiments of the present disclosure and is not intended to limit the present disclosure.

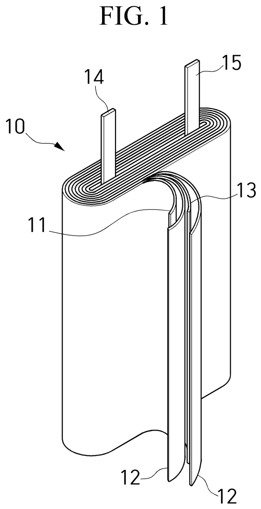

FIG. 1 schematically illustrates an electrode assembly 10 of a secondary battery.

The electrode assembly 10 may be formed by winding or stacking a stack of a first electrode plate 11, a separator 12, and a second electrode plate 13, which are formed as thin plates or films. When the electrode assembly 10 is a wound stack, a winding axis may be parallel to the longitudinal direction (e.g., the y direction) of the electrode assembly 10. In other example embodiments, the electrode assembly 10 may be a stack type rather than a winding type, and the shape of the electrode assembly 10 is not limited in the examples of the present disclosure. In addition, the electrode assembly 10 may be or include a Z-stack electrode assembly in which a positive electrode plate and a negative electrode plate are inserted into both sides of a separator, which is then bent into a Z-stack. In addition, one or more electrode assemblies may be stacked such that long sides of the electrode assemblies are adjacent to each other and accommodated in the case, and the number of electrode assemblies in the case is not limited in the examples of the present disclosure. The first electrode plate 11 of the electrode assembly 10 may act as a negative electrode, and the second electrode plate 13 may act as a positive electrode. In other examples, the reverse is also possible.

The first electrode plate 11 may be formed by applying a first electrode active material, such as graphite or carbon, to a first electrode current collector formed of a metal foil, such as copper, a copper alloy, nickel, or a nickel alloy. A first electrode tab 14 may be connected to an external first terminal (not shown). In some example embodiments, when the first electrode plate 11 is manufactured, the first electrode tab 14 may be formed by being cut in advance to protrude to one side of the electrode assembly 10, or the first electrode tab 14 may protrude to one side of the electrode assembly 10 more than, e.g., farther than or beyond, the separator 12 without being separately cut.

The second electrode plate 13 may be formed by applying a second electrode active material, such as a transition metal oxide, on a second electrode current collector formed of or including a metal foil, such as aluminum or an aluminum alloy. The second electrode plate 13 may include a second electrode tab 15 (e.g., a second uncoated portion) that is or includes a region to which the second electrode active material is not applied. The second electrode tab 15 may be connected to an external second terminal (not shown). In some example embodiments, the second electrode tab 15 may be formed by being cut in advance to protrude to the other side (e.g., the opposite side) of the electrode assembly 10 when the second electrode plate 13 is manufactured, or the second electrode plate 13 may protrude to the other side of the electrode assembly more than, e.g., farther than or beyond, the separator 12 without being separately cut.

In some example embodiments, the first electrode tab 14 may be located on the left side of the electrode assembly 10, and the second electrode tab 15 may be located on the right side of the electrode assembly 10. In other example embodiments, the first electrode tab 14 and the second electrode tab 15 may be located on one side of the electrode assembly 10 in the same direction.

Here, for convenience of description, the left and right sides are defined according to the electrode assembly 10 as oriented in FIG. 1, and the positions thereof may change when the secondary battery is rotated left and right or up and down.

The separator 12 hinders or substantially prevents a short-circuit between the first electrode 11 and the second electrode 13 while allowing movement of lithium ions therebetween. The separator 12 may be made of or include, for example, a polyethylene film, a polypropylene film, a polyethylene-polypropylene film, etc.

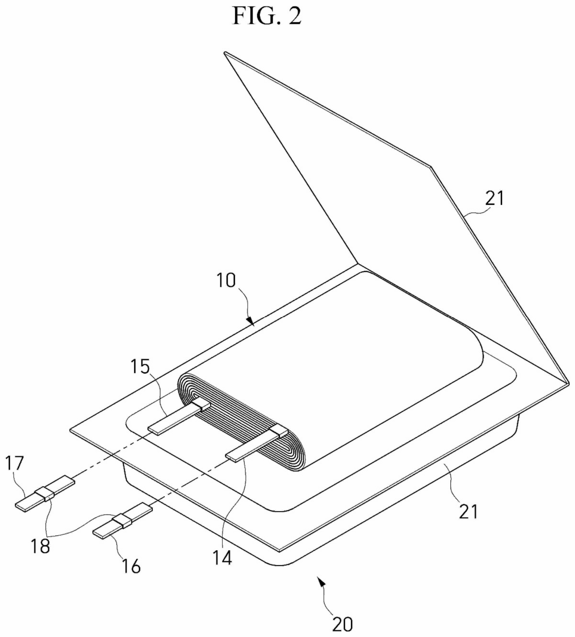

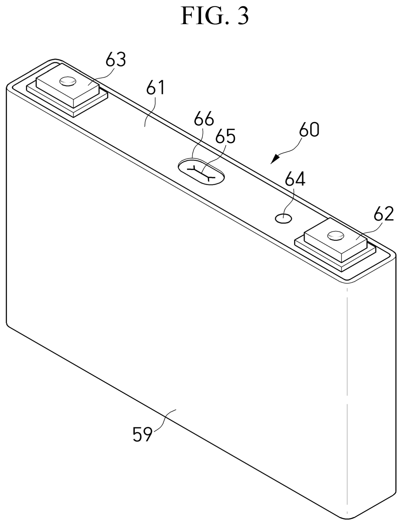

In some example embodiments, the electrode assembly 10 may be accommodated in a case (not shown in FIG. 1) along with an electrolyte. In the case of a pouch-type secondary battery, the electrode assembly 10 may be accommodated in a pouch made of or including flexible material in the form illustrated in FIG. 2. In the case of a prismatic secondary battery, the electrode assembly 10 may be accommodated in a prismatic metal case in the form illustrated in FIG. 3.

FIG. 2 schematically illustrates a pouch-type secondary battery.

The pouch-type secondary battery includes an electrode assembly 10 and a pouch 20 that accommodates or contains the electrode assembly 10 therein.

The electrode assembly 10 may be the same as the electrode assembly 10 illustrated in FIG. 1. The first electrode tab 14 and the second electrode tab 15 of the electrode assembly 10 may be electrically connected to respective external first and second terminal leads 16, 17 by, e.g., welding or other attaching method that preserves conductivity therebetween. At least a portion of each of the first terminal lead 16 and the second terminal lead 17 may be attached or covered with a tab film 18 for insulation from the pouch 20.

The pouch 20 may be sealed by having sealing parts 21 at the edges thereof come into contact with each other while accommodating or containing the electrode assembly 10 therein, in which case the sealing may be achieved with the tab film 18 interposed between the sealing parts 21. The sealing parts 21 of the pouch 20 may be made of or include a thermal fusion material that generally has weak adhesion to metal. Thus, it may be fused to the pouch 20 by interposing the thin tab film 18 between the sealing parts 21.

FIG. 3 illustrates a schematic external appearance configuration of a prismatic secondary battery.

A prismatic case 59 defines an overall appearance of the prismatic secondary battery, and may be made of or include a conductive material, e.g. a conductive metal, such as aluminum, aluminum alloy, or nickel-plated steel. In addition, the case 59 may provide a space for accommodating or containing an electrode assembly 10 therein. The electrode assembly 10 may be the same as the electrode assembly 10 illustrated in FIG. 1.

A cap assembly 60 may include a cap plate 61 that covers an opening of the case 59, and the cap plate 61 may be made of or include a conductive material. A first terminal 63 and a second terminal 62 may be electrically connected to the first electrode tab 14 and the second electrode tab 15, respectively, of the electrode assembly 10, and may be installed to protrude outward through the cap plate 61.

The cap plate 61 may be equipped with or include an electrolyte injection port 64 configured to install a sealing plug therein, and a vent 66 which may be formed to include, or may have installed therein, a notch 65. The vent 66 is configured to discharge any gas generated inside the secondary battery.

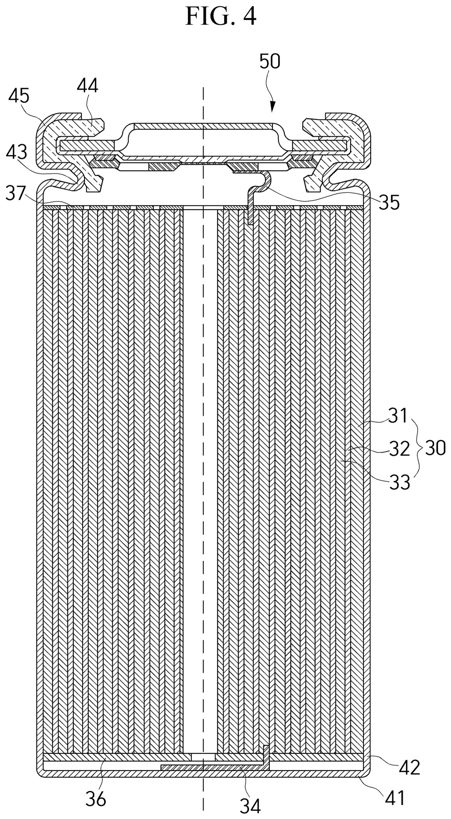

FIG. 4 is a cross-sectional view of a cylindrical secondary battery.

The cylindrical secondary battery includes an electrode assembly 30, a case accommodating the electrode assembly 30 and an electrolyte therein, a cap assembly 50 coupled to an opening of the case to seal the case, and an insulating plate 37 located between the electrode assembly 30 and the cap assembly 50 inside the case.

The electrode assembly 30 may include a separator 32 between a first electrode 33 and a second electrode 31, and the electrode assembly 30 may be wound in a jelly-roll form.

The first electrode 33 may include a first substrate and a first active material layer located on the first substrate. A first lead tab 35 may extend outward from a first uncoated portion of the first substrate where the first active material layer is not located, and may be electrically connected to the cap assembly 50.

The second electrode 31 may include a second substrate and a second active material layer located on the second substrate. A second lead tab 34 may extend outward from a second uncoated portion of the second substrate where the second active material layer is not located, and may be electrically connected to the case. The first lead tab 35 and the second lead tab 34 may extend in opposite directions with respect to each other.

The first electrode 33 may constitute a positive electrode. In this case, the first substrate may be composed of or include, for example, aluminum foil, and the first active material layer may include, for example, a transition metal oxide. The second electrode 31 may constitute a negative electrode. In this case, the second substrate may be composed of or include, for example, copper foil or nickel foil, and the second active material layer may include, for example, graphite.

The separator 32 may reduce or prevent a short-circuit between the first electrode 33 and the second electrode 31 while allowing movement of lithium ions therebetween. The separator 32 may be made of or include, for example, at least one of a polyethylene film, a polypropylene film, a polyethylene-polypropylene film, etc.

The case accommodates or contains the electrode assembly 30 and the electrolyte, and substantially forms the external appearance of the secondary battery together with the cap assembly 50. The case may have a substantially cylindrical body portion 42, and a bottom portion 41 connected to one side of the body portion 42. A beading part 43 deformed inwardly may be formed in the body portion 42, and a crimping part 45 bent inwardly may be formed at an open end of the body portion 42.

The beading part 43 may reduce or prevent movement of the electrode assembly 30 inside the case, and may facilitate seating of a gasket 44 and the cap assembly 50. A crimping part 45 may firmly fix the cap assembly 50 by pressing the edge of the cap assembly 50 against the gasket 44. The case may be formed of or include iron plated with nickel, for example.

The cap assembly 50 may be fixed to the inside of the crimping part 45 through the gasket 44 to seal the case. The cap assembly 50 may include a cap up, a safety vent, a cap down, an insulating member, and a subplate, but is not limited to this example and may be variously modified.

The cap up may be located at the very top of the cap assembly 50. The cap up may include a terminal portion that protrudes convexly upward and is connected to an external circuit, and an outlet for discharging gas may be located around the terminal portion.

The safety vent may be located below the cap up. The safety vent may include a protrusion that protrudes convexly downward and is connected to the subplate, and at least one notch located around the protrusion.

When gas is generated due to overcharging or abnormal operation of the secondary battery, the protrusion may be deformed upward by pressure and may separate from the subplate, while the safety vent may be cut along the notch. The cut safety vent may hinder or prevent the secondary battery from exploding by discharging gas to the outside.

The cap down may be located below the safety vent. The cap down may be formed with a first opening for exposing the protrusion of the safety vent and a second opening for discharging gas. The insulating member may be located between the safety vent and the cap down to insulate the safety vent and the cap down.

The subplate may be located below the cap down. The subplate may be fixed to a lower surface of the cap down to block the first opening of the cap down, and the protrusion of the safety vent may be fixed to the subplate. The first lead tab 35 pulled out from the electrode assembly 30 may be fixed to the subplate. Accordingly, the cap up, the safety vent, the cap down, and the subplate may be electrically connected to the first electrode 33 of the electrode assembly 30.

The insulating plate 37 may be located below the beading portion 43 to be in contact with the electrode assembly 30, and may be provided with a tab opening for pulling out the first lead tab 35. The cap assembly 50, which is electrically connected to the first electrode 33 by the first lead tab 35, may face the electrode assembly 30 with the insulating plate 37 interposed therebetween, and may maintain an insulated state from the electrode assembly 30 by the insulating plate 37. On the other hand, another insulating plate 36 may be included for insulation between the electrode assembly 30 and the bottom portion 41 of the case.

Hereinbelow, the background in which the present disclosure is proposed to aid the understanding of those skilled in the art will be described, followed by description of embodiments of the present disclosure.

In the case where drying after coating an electrode plate for secondary batteries is performed using a hot-air drying method, which is a method of transferring thermal energy to the wet electrode plate through convection, the thermal transfer efficiency is relatively low, requiring significant power input, thereby exacerbating environmental issues such as carbon emissions. Due to the low thermal transfer efficiency of the hot-air drying method, it is necessary to install and operate a relatively long hot-air drying path (ranging from 60 meters to 100 meters) based on a mass production line to achieve sufficient drying. Furthermore, installation of drying furnaces in two stages for double-sided coating increases the volume occupied by the electrode plate drying furnaces in a mass production line, thereby raising issues related to the increase in factory construction costs. In addition, electrode plates are made thicker to increase the capacity of secondary batteries, the time required to dry electrode plates increases, leading to a reduction in the productivity of the drying process.

In the case of directly irradiating an electrode plate with a laser heat source to dry the electrode plate, thermal transfer efficiency may be enhanced through radiative thermal energy compared to hot-air drying, input power consumption and carbon emissions may be reduced compared to hot-air drying furnaces, and the electrode plate drying efficiency may be improved, thereby making it possible to reduce the length of the drying furnace, and increase the productivity of the electrode plate drying process.

The present disclosure may be proposed in consideration of the aforementioned background, and may provide a laser system that is optimized for and is able to flexibly respond to an electrode plate drying process on a mass production line, particularly, a multi-line coated electrode plate drying process.

According to embodiments of the present disclosure, by providing a laser system with specifications optimized for a multi-line coated electrode plate drying process, application of thermal energy to non-coated portions may be minimized during electrode plate drying with the laser heat source, thereby reducing occurrence of wrinkles or curls in the electrode plate and improving electrode plate drying quality.

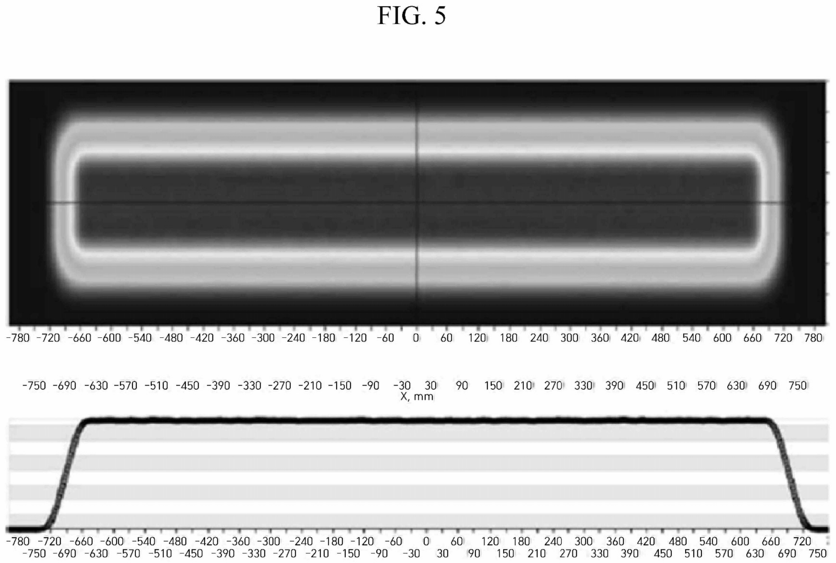

FIG. 5 illustrates a laser beam profile according to a related art.

According to the related art, a laser beam is irradiated uniformly at the same thermal energy intensity across the entire width of an electrode plate that is a target to be dried. According to the related art, differences in drying rates may occur during a multi-line coated electrode plate drying process, depending on lines on the electrode plate or positions in each line (such as a central portion or a side portion). If the electrode plate pass through the drying furnace for the same amount of time, deviations in the drying degree arise depending on the lines or positions on the electrode plate, resulting in over-drying in certain areas and under-drying in other areas, thereby making it difficult to ensure uniform electrode plate drying quality. Furthermore, when a beam is irradiated with the same energy profile, a significant amount of energy may also be applied to the non-coated portions between the lines of coating, resulting in the occurrence of wrinkles in the non-coated portions and curls in the electrode plate, thereby degrading the electrode plate drying quality.

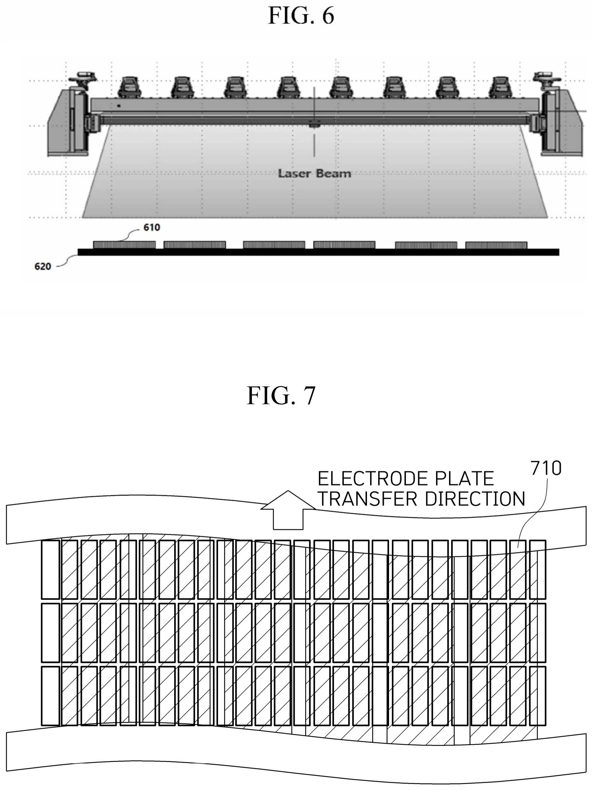

FIG. 6 illustrates a front view of a system for controlling electrode plate drying according to embodiments of the present disclosure. FIG. 7 illustrates a plan view of the system for controlling electrode plate drying according to embodiments of the present disclosure.

Referring to FIG. 6, an example is illustrated where a laser heat source is installed in a drying furnace to dry an electrode plate with six coating lines. The number of coating lines in a mass production line is designed to range from 4 to 8, and installation and control of the laser heat source may be adjusted according to the number of coating lines. To ensure that a relatively less amount of energy is applied to a non-coated portion 620, a beam may be irradiated onto an active material 610 with an energy profile.

According to the related art, as described above, after multi-line coating of the electrode plate, in a process of drying the coated active material by passing the electrode plate through the laser heat source, an entire laser area may be turned on to perform uniform energy irradiation across the entire width of the electrode plate.

According to embodiments of the present disclosure, performing power supply output control makes it possible to segment and control a laser beam area 710, as illustrated in FIG. 7, thereby leading to a technical feature that enables on/off switching and output adjustment for each segmented small area.

FIG.S 8A to 8D illustrate types of laser beam profiles according to embodiments of the present disclosure.

When implementing a beam profile, a design may be performed to minimize thermal energy applied to the non-coated portion (620 in FIG. 6). According to embodiments of the present disclosure, it is possible to mitigate occurrence of wrinkles or curls due to expansion of the non-coated portion, thereby enhancing the electrode plate drying quality, and reducing unnecessary energy consumption.

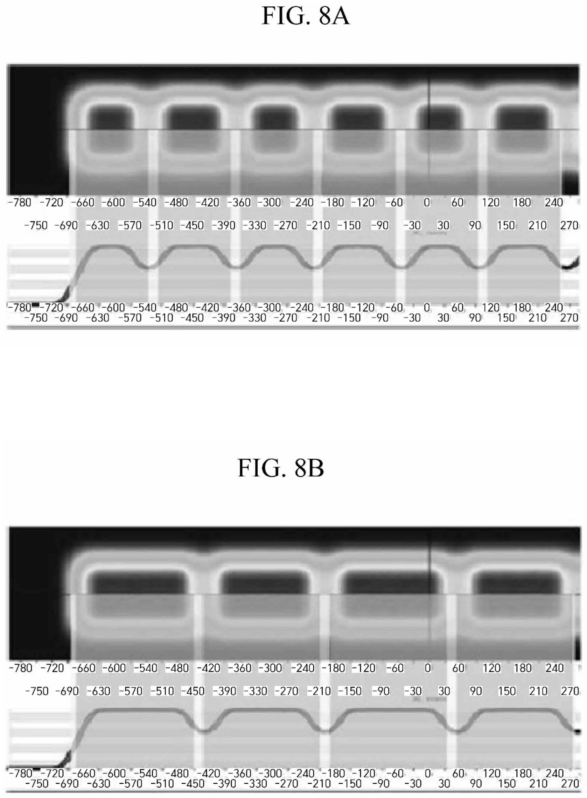

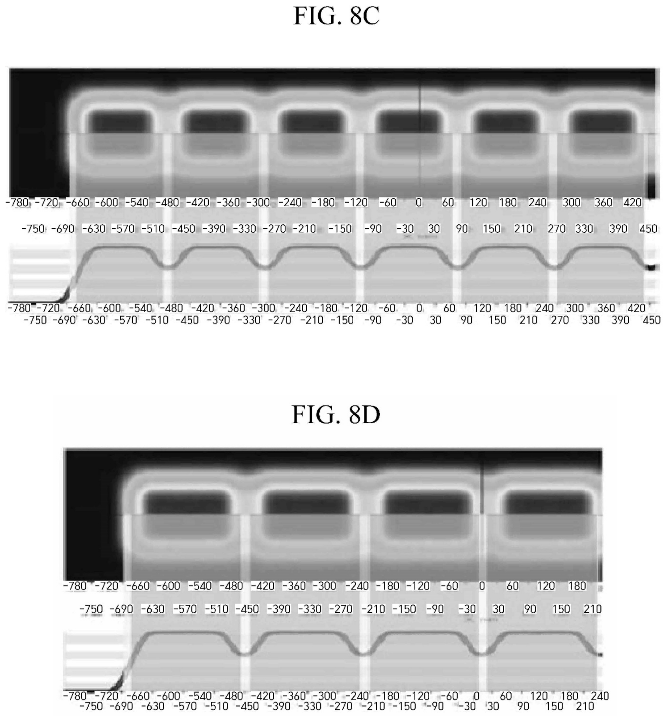

FIGS. 8A to 8D, even in the case where the coating line number and size of the electrode plate are changed, it is possible to flexibly respond with a beam profile configuration suitable for the changed number and/or size of coating lines through segmented output control of the laser beam irradiation area. Since it is easy to change the model, it has an advantage of being favorable for multi-model compatibility in mass production drying lines.

FIG.S 9A to 9C illustrate beam profiles before using local dimming, when using local dimming, and when using local dimming and optics, according to embodiments of the present disclosure.

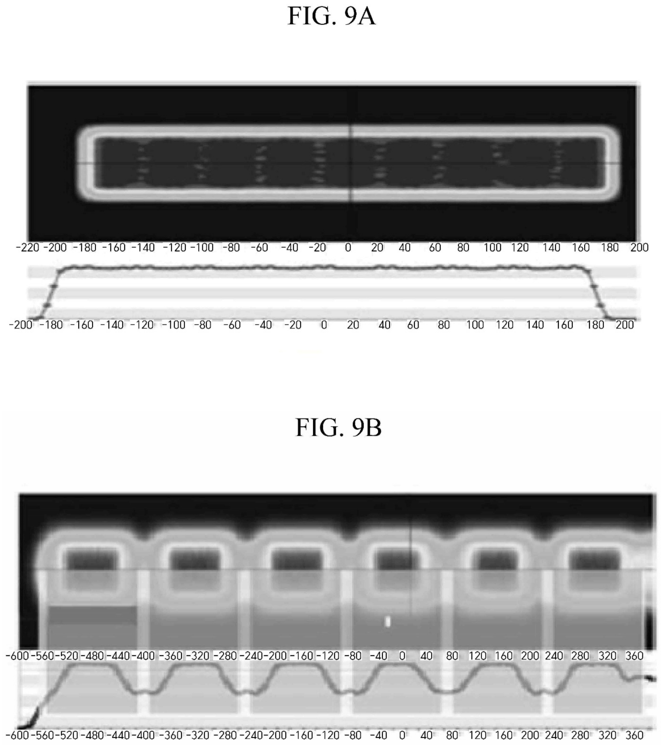

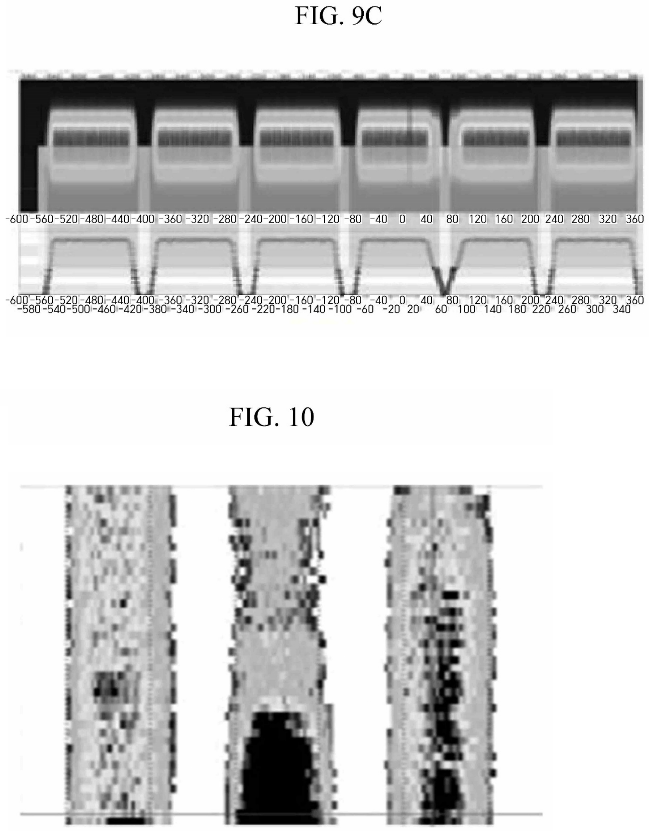

FIG. 9A illustrates a beam profile before using local dimming of a laser light source, FIG. 9B illustrates a beam profile in the case where local dimming is used, and FIG. 9C illustrates a beam profile in the case where local dimming and optics (lens array) are used.

To minimize energy irradiated onto the non-coated portion, the divergence angle of the laser beam may be reduced by using optics such as a microlens array.

FIG. 10 illustrates measurement data of the degree of electrode plate drying.

As illustrated in FIG. 10, during an electrode plate drying process, depending on the lines of coating on the electrode plate or the positions in each line, a drying status of the coating may vary.

In other words, taking into account occurrence of differences in drying rates depending on the lines of coating or the positions in each line, beam profile precision tuning may be performed for beam energy intensity customization control based on the degree of electrode plate drying.

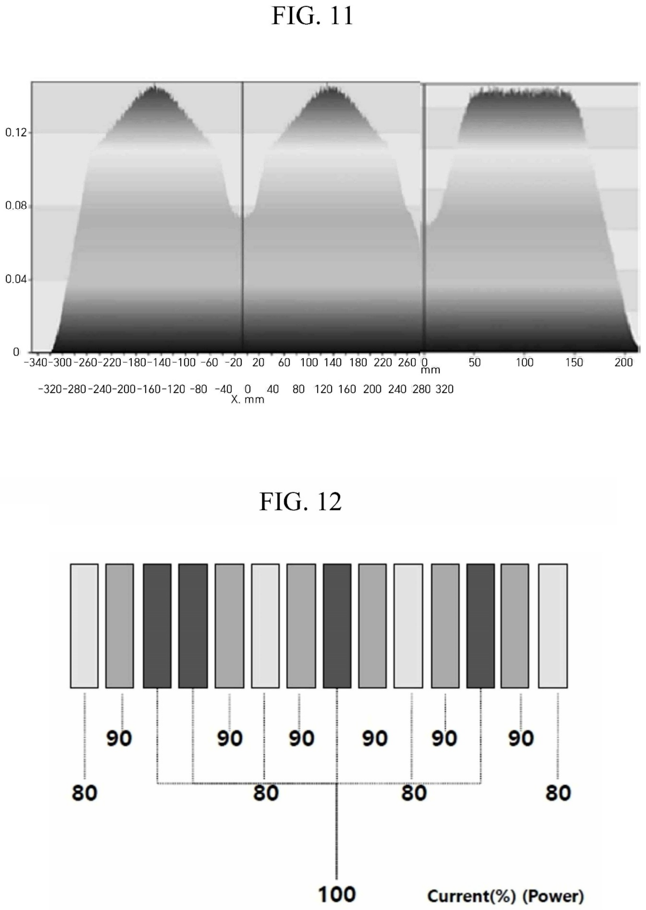

FIG. 11 illustrates beam energy intensity customization control based on the degree of electrode plate drying according to embodiments of the present disclosure.

Referring to FIG. 11, according to embodiments of the present disclosure, by precisely controlling the beam energy intensity profile in a customized manner based on the degree of electrode plate drying, an optimized energy profile required for each coating line/position of the electrode plate may be provided, thereby reducing the drying degree deviation between the coating liens/positions in the electrode plate drying process and ensuring uniform drying quality.

FIG. 12 illustrates power supply output control according to embodiments of the present disclosure.

According to embodiments of the present disclosure, as the power supply output control is performed for each segmented beam area, to implement a beam profile similar to Gaussian, current at the central portion may be controlled to achieve 100% beam output, and current may be controlled to gradually decrease to 90% and 80% from the central portion toward the opposite sides, thereby allowing for implementation of the beam profile illustrated in FIG. 11.

Differences in current values for the positions may be adjusted to vary based on a drying degree monitoring result of the coating in the lines on the electrode plate, and various adaptively-customized beam profiles based on the differences in current values for the positions may be provided.

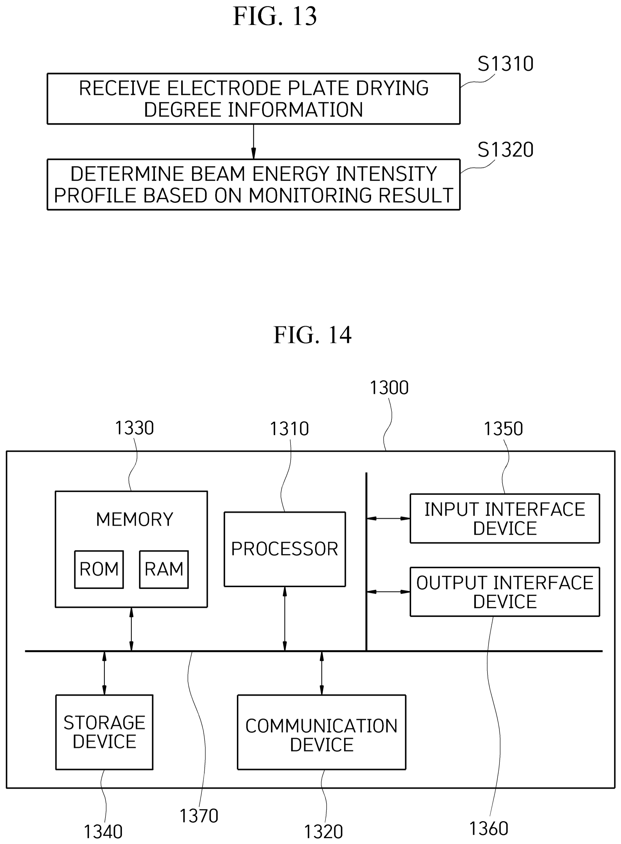

FIG. 13 illustrates a method of controlling electrode plate drying according to embodiments of the present disclosure.

The method of controlling electrode plate drying according to embodiments of the present disclosure may include step S1310 of receiving electrode plate drying degree information, and step S1320 of determining a beam energy intensity profile according to an electrode plate drying degree monitoring result.

In step S1310, drying degree information for the lines on the electrode plate or for positions in each line may be received.

In step S1320, a beam profile type for the laser beam irradiation areas segmented according to a preset scheme may be defined, and a beam energy intensity profile may be determined by controlling the percentage of current.

In step S1320, to reduce beam irradiation to the non-coated portion area, the output control may be performed with relatively high current based on the preset central area, and the output control may be performed with current that gradually decreases to relatively low levels toward the opposite sides based on the preset central area.

In step S1320, a laser beam is irradiated using local dimming and a lens array.

FIG. 14 is a block diagram illustrating a computer system for implementing the method according to embodiments of the present disclosure.

Referring to FIG. 14, the computer system 1300 may include at least one of a processor 1310, a memory 1330, an input interface device 1350, an output interface device 1360, and a storage device 1340 communicating with one another through a bus 1370. The computer system 1300 may also include a communication device 1320 coupled to a network. The processor 1310 may be or include a central processing unit (CPU) or a semiconductor device that executes instructions stored in the memory 1330 or in the storage device 1340. The memory 1330 and the storage device 1340 may include various types of volatile or nonvolatile storage media. For example, the memory may include a read-only memory (ROM) and a random access memory (RAM). In example embodiments of the present disclosure, the memory may be located inside or outside the processor, and may be connected to the processor through various known means. The memory is or includes various types of volatile or nonvolatile storage media, and for example, may include a read-only memory (ROM) or a random access memory (RAM).

The system for controlling electrode plate drying according to embodiments of the present disclosure may include an input interface device 1350 that receives electrode plate drying information, a memory 1330 that stores a program for performing electrode plate drying using a laser beam with the electrode plate drying information, and a processor 1310 that executes the program. The processor 1310 may determine a laser beam energy intensity profile using the electrode plate drying information.

The input interface device 1350 may receive at least one of electrode plate drying degree information for the lines on the electrode plate and electrode plate drying degree information for the positions in each line.

The processor 1310 may perform output control of the laser beam area according to the laser beam energy intensity profile.

The processor 1310 may adjust the laser beam energy intensity profile based on a change in the number of coating lines.

The processor 1310 may adjust the laser beam energy intensity profile based on a change in the coating size.

The processor 1310, to reduce beam irradiation to the non-coated portion area, may perform the output control with relatively high current based on the preset central area, and perform the output control with current that gradually decreases to relatively low levels toward the opposite sides based on the preset central area.

According to embodiments of the present disclosure, thermal energy intensity may be controlled in a customization manner based on the drying statuses for the lines of coating on the electrode plate or the positions in each line, minimized energy may be applied to the non-coated portion area where the thermal energy irradiation is not required, and control over the thermal energy intensity distribution (beam profile) is enabled.

As the on/off and output of the laser beam area may be segmented and controlled, it is possible to turn off the output for each area based on the position the non-coated portion, or provide a customized thermal energy intensity profile based on the drying statuses for the lines of coating on the electrode plate or the positions in each line measured by a densitometer.

Accordingly, example embodiments of the present disclosure may be implemented as a method implemented in a computer or a non-transitory computer-readable medium storing computer-executable instructions. In an example embodiment, when executed by the processor, computer-readable instructions may perform a method according to at least one aspect of the present disclosure.

The communication device 1320 may transmit or receive wired signals or wireless signals.

Additionally, the method according to an example embodiment of the present disclosure may be implemented in the form of program instructions that can be executed through various computer means and recorded on a computer-readable medium.

The computer-readable medium may include program instructions, data files, data structures, etc., singly or in combination. The program instructions recorded on the computer-readable medium may be specially designed and configured for the example embodiments of the present disclosure, or may be known and usable by those skilled in the art of computer software. Computer-readable recording media may include a hardware device configured to store and perform program instructions. For example, the computer-readable recording media may be or include magnetic media such as hard disks, floppy disks, and magnetic tapes, optical media such as CD-ROMs and DVDs, magneto-optical media such as floptical disks, ROM, RAM, flash memory, etc. The program instructions may include not only machine language codes such as that generated by a compiler, but also high-level language codes that can be executed by a computer through an interpreter, etc.

Hereinafter, any material that may be usable for the secondary battery according to examples of the present disclosure will be described.

As the positive electrode active material, a compound capable of reversibly intercalating/deintercalating lithium (e.g., a lithiated intercalation compound) may be used. For example, at least one of a composite oxide of lithium and a metal such as at least one of cobalt, manganese, nickel, and combinations thereof may be used.

The composite oxide may be or include a lithium transition metal composite oxide, and examples thereof may include at least one of a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by at least any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b50.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas: A is or includes at least Ni, Co, Mn, or a combination thereof; X is or includes at least Al, Ni, Co, Mn, Cr, Fe, Mg, Sr, V, a rare earth element, or a combination thereof; D is or includes at least O, F, S, P, or a combination thereof; G is or includes at least Al, Cr, Mn, Fe, Mg, La, Ce, Sr, V, or a combination thereof; and L1 is or includes at least Mn, Al, or a combination thereof.

A positive electrode for a lithium secondary battery may include a current collector and a positive electrode active material layer formed on the current collector. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The current collector may be or include aluminum (Al) but is not limited thereto.

The negative electrode active material may include a material capable of reversibly intercalating/deintercalating at least one of lithium ions, lithium metal, an alloy of lithium metal, a material capable of being doped and undoped with lithium, or a transition metal oxide.

The material capable of reversibly intercalating/deintercalating lithium ions may be or include a carbon-based negative electrode active material, which may include, for example, at least crystalline carbon, amorphous carbon, or a combination thereof. Examples of the crystalline carbon may include graphite, such as natural graphite or artificial graphite, and examples of the amorphous carbon may include at least one of soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be or include at least silicon, a silicon-carbon composite, SiOx (0 < x < 2), a Si-based alloy, or a combination thereof.

The silicon-carbon composite may be or include a composite of silicon and amorphous carbon. According to one example embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a current collector and a negative electrode active material layer disposed on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, at least one of copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent may constitute a medium through which ions involved in the electrochemical reaction of the battery can move.

The non-aqueous organic solvent may be or include at least a carbonate-based, an ester-based, an ether-based, a ketone-based, an alcohol-based solvent, an aprotic solvent, and may be used alone or in combination of two or more.

Depending on the type of lithium secondary battery, a separator may be present between the first electrode plate (e.g., the negative electrode) and the second electrode plate (e.g., the positive electrode). As the separator, at least polyethylene, polypropylene, polyvinylidene fluoride, or a multilayer film of two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles such as at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer containing an organic material and a coating layer containing an inorganic material that are laminated on each other.

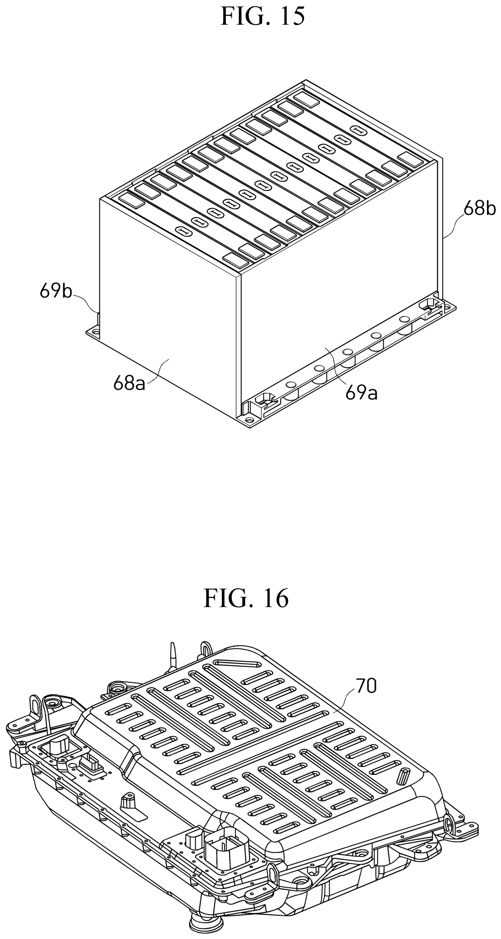

FIG. 15 is an illustration of a secondary battery module in which secondary batteries manufactured according to examples of the present disclosure are arranged. With the increase in secondary battery capacity for driving electric vehicles, and the like, a secondary battery module may be manufactured by arranging and connecting a plurality of secondary battery cells transversely and/or longitudinally. The plurality of secondary batteries may be arranged in a space defined by a pair of facing end plates 68a and 68b and a pair of facing side plates 69a and 69b. The secondary batteries may be designed appropriately in arrangement (direction) and number to obtain desired voltage and current specifications.

FIG. 16 is an illustration schematically showing the configuration of a battery pack 70 according to example embodiments of the present disclosure. Referring to FIG. 16, a battery pack 70 may include an assembly to which individual batteries are electrically connected, and a pack housing accommodating the same. In the drawings, for convenience of illustration, components including a bus bar, a cooling unit, external terminals for electrically connecting batteries, etc., are not shown.

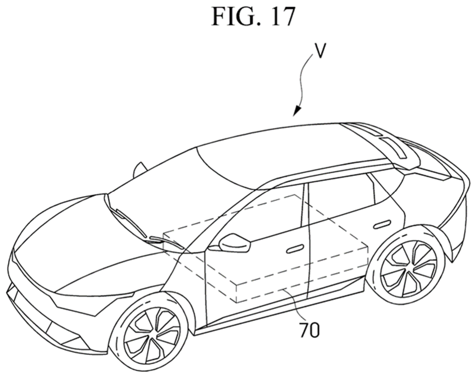

The battery pack 70 may be mounted on (or in) a vehicle. The vehicle may be, for example, an electric vehicle, a hybrid vehicle, a plug-in hybrid vehicle, and the like. The vehicle may be a four-wheeled vehicle or a two-wheeled vehicle but is not limited thereto. FIG. 17 shows a vehicle V which includes the battery pack 70 shown in FIG. 16 on the lower body thereof. The vehicle V may operate by (e.g., may be powered by) receiving power from the battery pack 70.

However, effects that can be achieved through the present disclosure are not limited to the above-described effects, and other technical effects not mentioned will be clearly understood by those skilled in the art from the description of the invention described below.

Embodiments are set out in the following clauses.

Clause 1. A method of controlling electrode plate drying, the method being performed by a system for controlling electrode plate drying, and comprising steps of: (a) receiving electrode plate drying degree information; and (b) determining laser beam energy intensity profile based on an electrode plate drying degree monitoring result.

Clause 2. The method of Clause 1, wherein the step (a) comprises receiving drying degree information for lines on the electrode plate.

Clause 3. The method of Clause 1, wherein the step (a) comprises receiving drying degree information for positions in each line on the electrode plate.

Clause 4. The method of Clause 1, wherein the step (b) comprises defining a beam profile type for laser beam irradiation areas segmented according to a preset scheme, and determining a beam energy intensity profile by controlling a percentage of current.

Clause 5. The method of Clause 1, wherein the step (b) comprises, to reduce beam irradiation to a non-coated portion area, performing output control with relatively high current based on a preset central area, and performing output control with current that gradually decreases to relatively low levels toward opposite sides based on the preset central area.

Clause 6. The method of Clause 1, wherein the step (b) comprises irradiating a laser beam using local dimming and a lens array.

Clause 7. A system for controlling electrode plate drying, comprising: an input interface device configured to receive electrode plate drying information; a memory storing a program provided to perform electrode plate drying using a laser beam based on the electrode plate drying degree information; and a processor configured to execute the program, and wherein the processor determines a laser beam energy intensity based on the electrode plate drying degree information.

Clause 8. The system of Clause 7, wherein the input interface device receives at least one of the electrode plate drying degree information for lines on the electrode plate and the electrode plate drying degree information for positions in each of the lines.

Clause 9. The system of Clause 7, wherein the processor performs output control of a laser beam area according to the laser beam energy intensity profile.

Clause 10. The system of Clause 9, wherein the processor adjusts the laser beam energy intensity profile based on a change in the number of coating lines.

Clause 11. The system of Clause 9, wherein the processor adjusts the laser beam energy intensity profile based on a change in a coating size.

Clause 12. The system of Clause 9, wherein the processor, to reduce beam irradiation to a non-coated portion area, performs the output control with relatively high current based on a preset central area, and performs the output control with current that gradually decreases to relatively low levels toward opposite sides based on the preset central area.

Although the present disclosure has been described above with respect to example embodiments thereof, the present disclosure is not limited thereto. Various modifications and variations can be made thereto by those skilled in the art within the scope of the present disclosure and the equivalent scope of the appended claims.

## Claims

1. A method of controlling electrode plate drying, the method being performed by a system for controlling electrode plate drying, and comprising the steps of:
(a) receiving electrode plate drying degree information; and
(b) determining a laser beam energy intensity profile of a laser beam operable to perform electrode plate drying based on the electrode plate drying degree information.

2. The method as claimed in claim 1, wherein the electrode plate comprises coating lines,
and wherein the electrode plate drying degree information received at step (a) comprises at least one of:
drying degree information for the coating lines on the electrode plate; and
drying degree information for positions in each of the coating lines.

3. The method as claimed in claim 1 or 2, wherein step (b) comprises defining a beam profile type for laser beam irradiation areas segmented according to a preset scheme, and determining the beam energy intensity profile by controlling a percentage of current.

4. The method as claimed in claim 1, 2 or 3, wherein, to reduce beam irradiation of an area of a non-coated portion of the electrode plate, step (b) comprises:
performing output control such that a relatively higher current is supplied to a preset central area of the laser beam; and
performing output control such that a current supplied to areas of the laser beam towards opposite sides of the preset central area gradually decreases to relatively lower levels of current compared to the relatively higher current supplied to the central area.

5. The method of claim 4, wherein the current supplied to the central area of the laser beam is controlled to achieve 100% beam output at the central area.

6. The method as claimed in any preceding claim, wherein step (b) comprises irradiating the laser beam using local dimming and a lens array.

7. A system for controlling electrode plate drying, comprising:
an input interface device configured to receive electrode plate drying degree information;
a memory storing a program provided to perform electrode plate drying using a laser beam based on the electrode plate drying degree information; and
a processor configured to execute the program, and
wherein the processor is configured to determine a laser beam energy intensity profile based on the electrode plate drying degree information.

8. The system as claimed in claim 7, wherein the electrode plate drying degree information received by the input interface device comprises at least one of:
electrode plate drying degree information for coating lines on the electrode plate; and
electrode plate drying degree information for positions in each of the coating lines.

9. **The system** as claimed in claim 7, wherein the processor is configured to perform output control of an area of the laser beam according to the laser beam energy intensity profile.

10. The system as claimed in claim 8 or 9, wherein the processor is configured to adjust the laser beam energy intensity profile based on a change in the number of the coating lines on the electrode plate.

11. The system as claimed in claim 8, 9 or 10, wherein the processor is configured to adjust the laser beam energy intensity profile based on a change in a coating size on the electrode plate.

12. The system as claimed in claim 9, 10 or 11, wherein, to reduce beam irradiation of an area corresponding to a non-coated portion of the electrode plate, the processor is configured to:
perform the output control such that a relatively higher current is supplied to a preset central area of the laser beam; and
perform the output control such that a current supplied to areas of the laser beam towards opposite sides of the preset central area gradually decreases to relatively lower levels of current compared to the relatively higher current supplied to the central area.
